Europäisches Patentamt

(19) **European Patent Office**

**Office européen des brevets**

(11) Veröffentlichungsnummer: **0 046 957**
**B1**

(12) **EUROPÄISCHE PATENTSCHRIFT**

(45) Veröffentlichungstag der Patentschrift:
**10.10.84**

(21) Anmeldenummer: **81106546.5**

(22) Anmeldetag: **24.08.81**

(51) Int. Cl.³: **C 09 D 9/00,** C 11 D 7/50,
C 08 K 5/34, C 09 J 3/00

(54) Verfahren zur Reduzierung der Konzentration von Lösungsmitteldampf.

(30) Priorität: **01.09.80 DE 3032891**

(43) Veröffentlichungstag der Anmeldung:
**10.03.82 Patentblatt 82/10**

(45) Bekanntmachung des Hinweises auf die Patenterteilung:
**10.10.84 Patentblatt 84/41**

(84) Benannte Vertragsstaaten:
**AT BE CH DE FR GB IT LI NL SE**

(56) Entgegenhaltungen:
**EP - A - 0 021 149**
**US - A - 3 784 477**
**US - A - 3 900 662**
**US - A - 3 973 058**
**US - A - 3 975 208**
**US - A - 4 120 810**
**US - A - 4 171 240**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Dierdorf, Hans-Rolf, Ludwig-Wolker-Strasse 25, D-4018 Langenfeld (DE)**

**Beschreibung**

Gegenstand der vorliegenden Erfindung ist ein Verfahren zur Reduzierung der Konzentration von Lösungsmitteldampf beim Verarbeiten von organischen Lösungsmitteln enthaltenden Klebmitteln.

Es ist seit langem ein Ziel der Technik, bei der Verarbeitung der verschiedensten Lösungsmittel die Konzentration des verdampften Lösungsmittels in den Arbeitsräumen zu verringern beziehungsweise möglichst gering zu halten. Geeignete Abzugssysteme erfüllen aber nicht immer den gewünschten Zweck, so daß man auf möglichst ungiftige beziehungsweise möglichst unschädliche Lösungsmittel zurückgreifen muß. Dabei darf aufgrund behördlicher Auflagen eine bestimmte maximale Konzentration an Lösungsmitteldampf in der Luft nicht überschritten werden. Diese Werte werden als sogenannte MAK-Werte (maximale Arbeitsplatzkonzentration) bezeichnet.

Eine andere Möglichkeit der Charakterisierung der beim Arbeiten mit Lösungsmitteln notwendigen Belüftung besteht darin, die XL-Werte anzugeben. Die XL-Werte berechnen sich aus der eben erwähnten maximalen Arbeitsplatzkonzentration nach folgender Formel

$$\text{XL-Faktor} = \frac{10\,000\ (\text{mg})}{\text{MAK}\ (\text{mg/m}^3)}\,.$$

Aus diesem XL-Faktor kann man durch Multiplikation mit dem jeweiligen Gewichtsprozentgehalt des Produktes und der Produktdichte (meist Werte um etwa 1) direkt die pro Liter Produkt benötigte Luftmenge errechnen:

$$\text{XL-Faktor} \times \%\ \text{Lösungsmittel} \times \text{Produktdichte} = \text{m}^3\ \text{Luft/l Produkt}$$

Aufgabe der vorliegenden Erfindung war es daher, einen Weg zu finden, um den Luftbedarf beim Arbeiten mit Lösungsmittelgemischen möglichst gering zu halten. Mit anderen Worten, die Konzentration des Lösungsmitteldampfes in der Arbeitsatmosphäre sollte so weit reduziert werden, daß ein möglichst unschädliches Arbeiten möglich ist. Dies bezieht sich auf Klebmittel, die Lösungsmittelgemische enthalten.

Erfindungsgemäß besteht das Verfahren zur Reduzierung der Konzentration vom Lösungsmitteldampf beim Verarbeiten von organischen Lösungsmitteln enthaltenden Klebmitteln darin, daß man 0,1 bis 20 Gewichtsprozent des Lösungsmittels durch N-Alkylpyrrolidon ersetzt, wobei der Alkylrest 1 bis 6 Kohlenstoffatome enthält. Insbesondere ersetzt man Lösungsmittel durch das N-Methylpyrrolidon-(2).

Abbeizmittel auf Lösungsmittelbasis, die auch Methylpyrrolidon enthalten sollen, und deren relativ niedrige Dampfdrucke waren zwar aus der US-PS 4 120 810 bekannt. Es sollen dieser Lehre gemäß aber aromatische Lösungsmittel gemeinsam mit Methylpyrrolidon verwendet werden. Keineswegs kann hieraus aber geschlossen werden, daß gerade der alleinige Zusatz von N-Methylpyrrolidon zu einer überdurchschnittlichen Verringerung von Lösungsmitteldampf in der Luft führt.

Das erfindungsgemäße Verfahren kann bei praktisch allen Lösungsmitteln verwendet werden. Es ist jedoch von besonderem Interesse der Einsatz des N-Alkylpyrrolidons, insbesondere N-Methylpyrrolidons, bei Lösungsmitteln, die enthalten Dimethylformamid, Tetrahydrofuran, Dioxan, Chlorkohlenwasserstoffe, Ester wie Amyl- und Butylacetat oder auch Aromaten wie Toluol oder Xylol sowie Ketone wie Aceton, Methylethylketon und insbesondere Cyclohexanon. Es muß insbesondere bei den Dimethylformamid enthaltenden Klebstoffen für PVC als überraschend angesehen werden, daß sein Ersatz nicht nur eine Senkung der Lösungsmittelkonzentration über das berechnete Maß hinaus bringt, sondern auch ohne Nachteile für die Verklebung der PVC-Teile ist. Dem Fachmann ist nämlich bekannt, daß dieses Lösungsmittel eine nicht näher geklärte ungünstige Wirkung bei der Klebung entfaltet.

Beispiel

Es wurde ein PVC-Kleber hergestellt, der folgende Zusammensetzung hatte:

21,71% PVC, Füllstoff, Pigment
49,29% Tetrahydrofuran (Thf.)
20,00% Cyclohexanon (Cycl.)
 4,00% Dimethylformaid (Dmf.)
 5,00% Methylethylketon (Mek.)

Daraus errechnet sich der Luftbedarf unter Berücksichtigung der YL-Faktoren und Prozentsätze Lösungsmittel

2

**0 046 957**

| | YL | % | l Luft |
|---|---|---|---|
| Thf. | 34,5 | 49,29 | → 1683 |
| Cycl. | 50,0 | 20,00 | → 990 |
| Dmf. | 333,3 | 4,00 | → 1320 |
| Mek. | 2,7 | 5,00 | → 112 |
| Summe: | | | → 4105 (Vergleichswert) |

Ersetzt man das Dimethylformamid durch die gleiche Menge N-Methylpyrrolidon (2), so ergibt sich ein Luftbedarf bei einem YL-Wert von 25,0 entsprechend 101 l zu 2883 l für das erfindungsgemäße Gemisch. (Bei der Rechnung wurde die Produktdichte mit 0,99 nicht berücksichtigt.)

Bei der praktischen Verwendung des Klebers wurden folgende Werte ermittelt:

Innerhalb eines sechsstündigen Arbeitstages wurden 72 Klebungen ausgeführt (alle 5 Minuten ein Klebevorgang). Die hierbei mittels Absorption von Lösungsmittel an einem System von Aktiv-Kohle-Röhrchen gemessenen Werte zeigen mit erfindungsgemäßem Lösungsmittelgemisch eine deutlich geringere Konzentration in der Luft der Arbeitsatmosphäre an.

| | Erfindung | Vergleich |
|---|---|---|
| Tetrahydrofuran | 3,67 mg/l | 7,07 mg/l |
| Cyclohexanon | 0,21 mg/l | 0,25 mg/l |
| Dimethylformamid | — | 0,13 mg/l |
| N-Methyl-2-pyrrolidon | <0,0 mg/l | — |
| Methylethylketon | 0,47 mg/l | 0,60 mg/l |
| Summe: | 4,35 mg/l | 8,05 mg/l |

## Patentansprüche

1. Verfahren zur Reduzierung der Konzentration vom Lösungsmitteldampf beim Verarbeiten von organischen Lösungsmitteln enthaltenden Klebmitteln, dadurch gekennzeichnet, daß man 0,1 bis 20 Gewichtsprozent des Lösungsmittels durch N-Alkylpyrrolidon ersetzt, wobei das Alkylrest 1 bis 6 Kohlenstoffatome enthält.

2. Verfahren nach Anspruch 1, dadurch gekennzeichnet, daß man als N-Alkylpyrrolidon das N-Methylpyrrolidon-(2) verwendet.

## Claims

1. A process for reducing the concentration of solvent vapor in the application of adhesives containing organic solvents, characterized in that from 0.1 to 20% by weight of the solvent is replaced by N-alkyl pyrrolidone, the alkyl radical containing from 1 to 6 carbon atoms.

2. A process as claimed in Claim 1, characterized in that N-methyl-2-pyrrolidone is used as the N-alkyl pyrrolidone.

## Revendications

1. Procédé pour réduire la concentration de vapeur de solvant dans le traitement de colle contenant des solvants organiques, caractérisé en ce que l'on rempalce 0,1 à 20% en poids du solvant par une N-alkylpyrrolidone dans laquelle le reste alkyle contient 1 à 6 atomes de carbone.

2. Procédé selon la revendication 1, caractérisé en ce que l'on utilise comme N-alkylpyrrolidone la N-méthylpyrrolidone-(2).

3